# EUROPÄISCHE PATENTSCHRIFT

(11) **EP 1 398 189 B1**
(45) Veröffentlichungstag und Bekanntmachung des Hinweises auf die Patenterteilung: **28.03.2012**
(21) Anmeldenummer: 03018825.4
(22) Anmeldetag: 19.08.2003
(51) Int. Cl.: B60J 1/18

(54) **Cabriolet-Fahrzeug**
Convertible vehicle
Véhicule convertible

(30) Priorität: 11.09.2002 DE 10242045
(43) Veröffentlichungstag der Anmeldung: 17.03.2004
(73) Patentinhaber: Wilhelm Karmann GmbH, 49084 Osnabrück (DE)
(72) Erfinder: Heselhaus, Udo, 49479 Ibbenbüren (DE)
(74) Vertreter: Kronthaler, Schmidt & Coll.

(56) Entgegenhaltungen:
- EP-A- 0 246 201
- US-A1- 2002 074 822
- US-B1- 6 302 470

## Beschreibung

Die Erfindung betrifft ein Cabriolet-Fahrzeug mit einem rückwärtigen, eine Heckscheibe umfassenden Dachteil und einem Spannbügel nach dem Oberbegriff des Anspruchs 1.

Die DE 100 41 487 A1 zeigt ein Cabriolet-Fahrzeug, bei dem die Heckscheibe zur Öffnung des Daches in einer Absenkbewegung unterhalb einer Fensterbrüstungslinie der Karosserie einfahrbar und in einem Fach ablegbar ist. Um eine günstige Ablagestellung der Heckscheibe zu ermöglichen, wird diese bei ihrer Öffnung aus dem sie umgebenden flexiblen Dachbereich gelöst und beim Schließen wieder darin eingepaßt. Damit geht ein hoher Dichtungsaufwand und mechanischer Aufwand zum Anpressen der Heckscheibe gegen die Dichtungen einher, was auch mit hohem Gewicht der verwendeten Konstruktion verbunden ist. Zudem ist die Breite der Heckscheibe eng begrenzt, um diese in den Verdeckbereich einpassen zu können.

Der Erfindung liegt das Problem zugrunde, ein Cabriolet-Fahrzeug zu schaffen, bei dem eine Dichtungsaufwand reduziert ist.

Die Erfindung löst dieses Problem durch ein Cabriolet-Fahrzeug mit den Merkmalen des Anspruchs 1. Hinsichtlich vorteilhafter Ausgestaltungen der Erfindung wird auf die abhängigen Ansprüche 2 bis 10 verwiesen.

Durch eine erfindungsgemäße Ausbildung eines Cabriolet-Fahrzeugs mit einem flexiblen Wasserkanal, der an den Spannbügel angebunden ist, ist dieser während seiner ganzen Bewegung optisch und gegen Wassereindringen gedichtet mit der Karosserie verbunden. Es bedarf keinerlei zusätzlichen Anpreßdrucks, um die Dichtung aufrechtzuerhalten. Die mechanischen Anforderungen sind daher gering. Diese Ausbildung ist insbesondere auch vorteilhaft bei einem mittig ausgenommenen Spannbügel nach Anspruch 1 einsetzbar.

Bei einer vorteilhaften Ausbildung kann durch das Ausnehmen der unterhalb der Heckscheibe liegenden Bereiche des Spannbügels der Durchsichtbereich der Heckscheibe nach unten hin vergrößert werden. Die Sichtfläche ist somit nicht durch einen hier liegenden Bügelabschnitt eingeschränkt. Zudem ist durch die Verkleinerung des Spannbügels auf die verbleibenden seitlichen Abschnitte das Gewicht gesenkt.

Bei einer Weiterbildung gemäß Anspruch 3 ergibt sich eine unmittelbare, optisch und gegen Wassereindringen gedichtete Anlage der Heckscheibe an die Karosserie. Es bedarf keines Rahmens oder dergleichen, in dem die Heckscheibe gehalten wäre, um die Dichtung zu ermöglichen. Damit kann die Heckscheibe beispielsweise weit in die Seitenbereiche hineingezogen werden und somit eine besonders große Durchsichtfläche und hohen Lichteinfall ermöglichen. Auch ist im unteren Bereich der Scheibe keine Stoffeinfassung erforderlich, diese kann bis zur Fensterbrüstungslinie heruntergezogen sein.

Insbesondere in Kombination der vorgenannten Ansprüche ist es vorteilhaft, wenn der Wasserkanal den rückwärtigen Dachabschluß horizontal U-förmig umläuft und in seitlichen Bereichen mit Abschnitten des Spannbügels und im mittleren Bereich mit der Heckscheibe verbunden ist. Dadurch ist der Dichtungsaufwand auf ein Minimum reduziert. Heckscheibe und eventuelle seitliche Spannbügelabschnitte können dichtungstechnisch in gleicher Weise behandelt werden, so daß sich eine hohe Flexibilität bei der Auswahl der Breite der Heckscheibe ergibt.

Der Wasserkanal kann vorteilhaft als einstückiges Bauteil ausgebildet sein, etwa als flexibles Kunststoffbauteil, insbesondere aus PVC. Sowohl Gewicht als auch Herstellungskosten sind dadurch verringert.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: ein erfindungsgemäßes Cabriolet-Fahrzeug in perspektivischer Gesamtansicht von schräg hinten bei geschlossenem Dach,
- Fig. 2: eine in etwa das Detail II in Fig. 1 umfassende schematische Darstellung mit zur besseren Übersicht transparent eingezeichnetem Textilbezug des Daches,
- Fig. 3: eine schematische Seitenansicht des hinteren Dachbereichs und dessen Verbindung mit der Karosserie in geschlossener Stellung,
- Fig. 4: eine ähnliche Ansicht wie Fig. 3 während der Öffnungsphase des Daches, in der der hintere Dachteil unter die Fensterbrüstungslinie abgesenkt wird,
- Fig. 5: eine ähnliche Ansicht wie Fig. 4 mit in der Karosserie abgelegtem hinterem Dachteil bei vollständig geöffnetem Dach,
- Fig. 6: einen Schnitt etwa entlang der Linie VI-VI in Fig. 3 (durchgezeichnet) bzw. in Fig. 5 (gestrichelt),

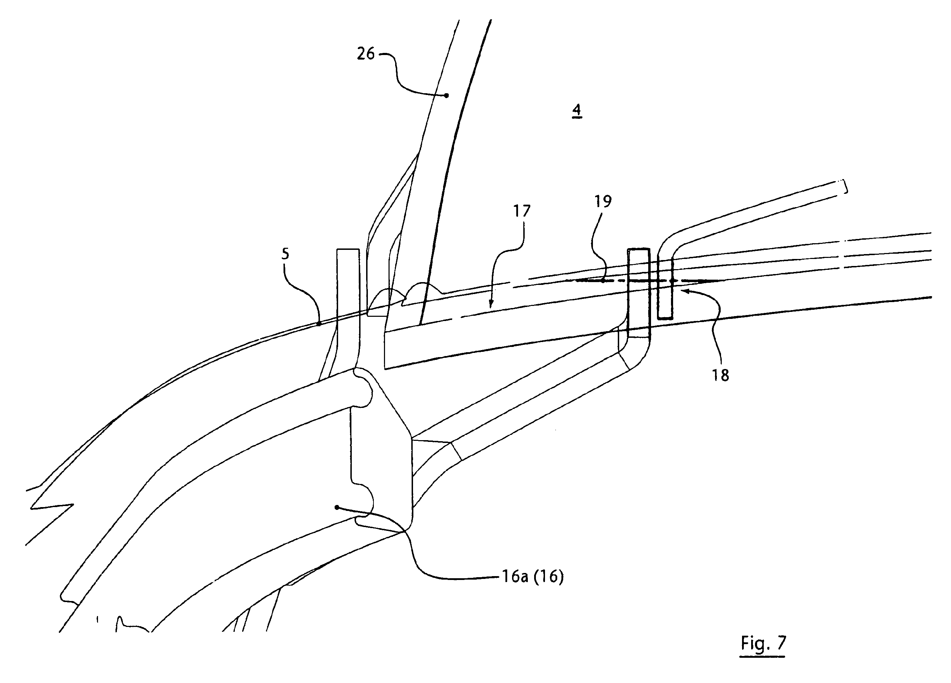

- Fig. 7: eine schematische Ansicht des in Fahrtrichtung linken unteren Eckbereichs der Heckscheibe von hinten, etwa aus Richtung des Pfeils VII in Fig. 1.

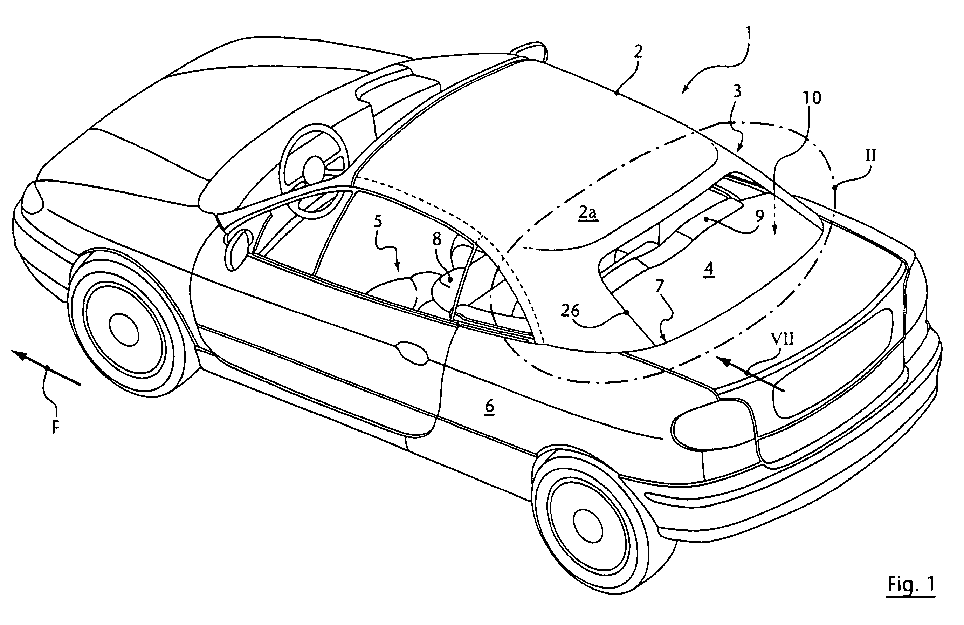

Das in Fig. 1 gezeigte und insgesamt mit 1 bezeichnete erfindungsgemäße Cabriolet-Fahrzeug weist ein bewegliches Dach 2 auf. Dessen bezüglich der Fahrtrichtung F rückwärtiger Bereich 3 umfaßt eine flexible oder insbesondere starre Heckscheibe 4, die beispielsweise aus Kunststoff oder vorteilhaft Glas bestehen kann.

Das Dach 2 kann bereichsweise starr und teilweise oder vollständig - außerhalb der Heckscheibe - mit einem textilen Bezug 2a versehen sein. Es ist insgesamt zu seiner Öffnung beweglich und kann teilweise oder vollständig unterhalb einer Fensterbrüstungslinie 5 innerhalb der Karosserie 6 abgelegt werden.

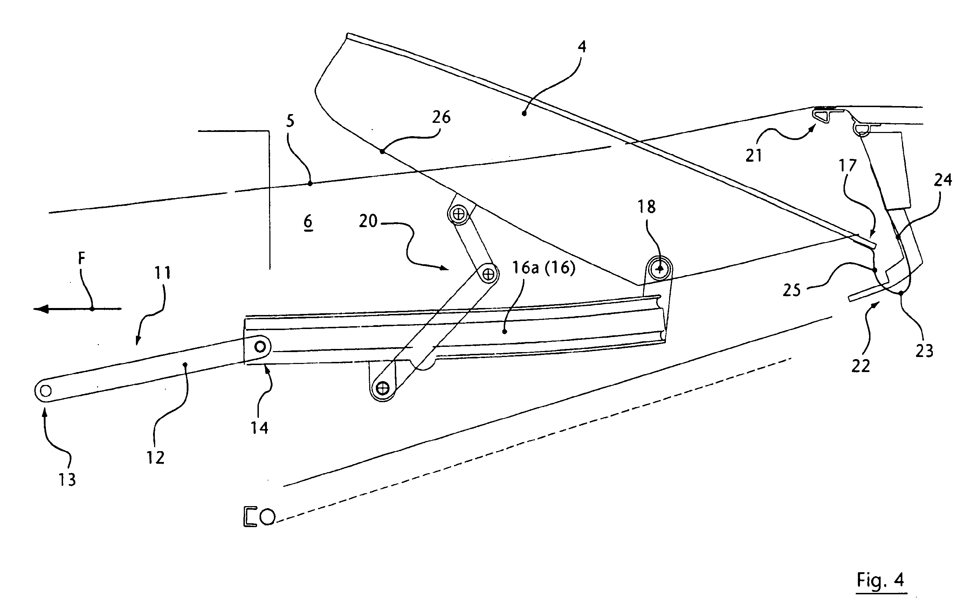

Im hier gezeigten Ausführungsbeispiel liegt das Dach 2 im geschlossenen Zustand nicht mit seinem hinteren unteren Rand 7 auf einem verdeckkastendeckel auf, der zunächst geöffnet werden müßte, um das Dach 2 absenken zu können, sondern dieses ist direkt in die Karosserie 6 absenkbar. Der hintere Randbereich 7 muß daher zur Dachöffnung nicht erst aufwärts verlagert werden, sondern kann schon in der beginnenden Öffnungsphase unter die Fensterbrüstungslinie 5 verlagert werden (Fig. 4). Eine ein- oder mehrteilige bewegliche Hutablage 10 kann vorgesehen sein, ebenso eine Persenning oder dergleichen Abdeckung für das abgelegte Dach 2.

Das Cabriolet-Fahrzeug 1 kann sowohl eine als auch mehrere Sitzreihen 8, 9 aufweisen. Die Längserstreckung des Daches 2 ist dann je nach Länge des zu überdeckenden Fahrzeuginsassenraums auszuwählen.

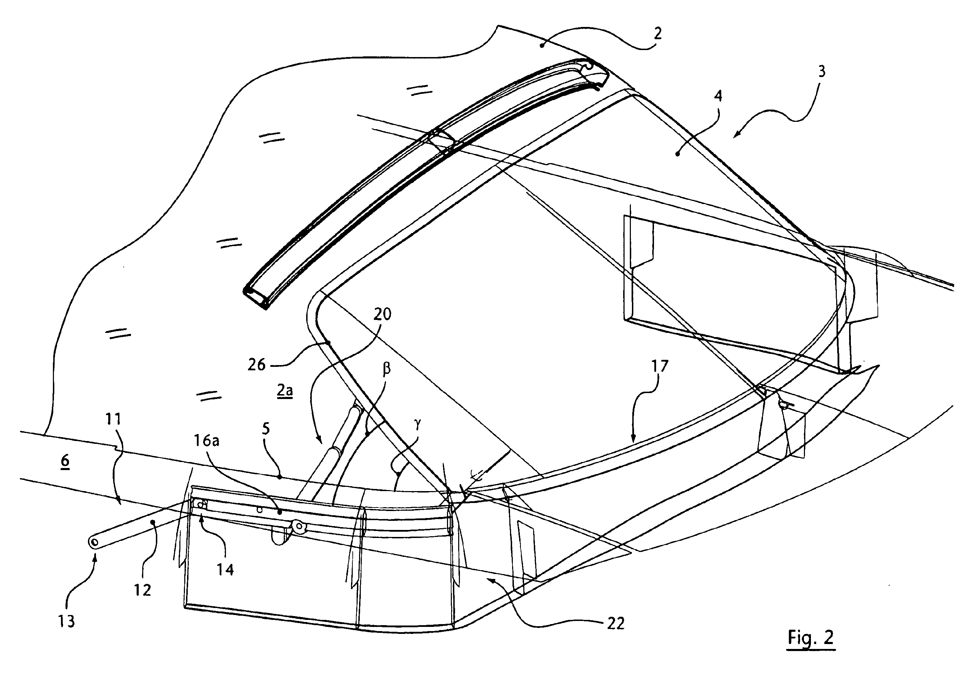

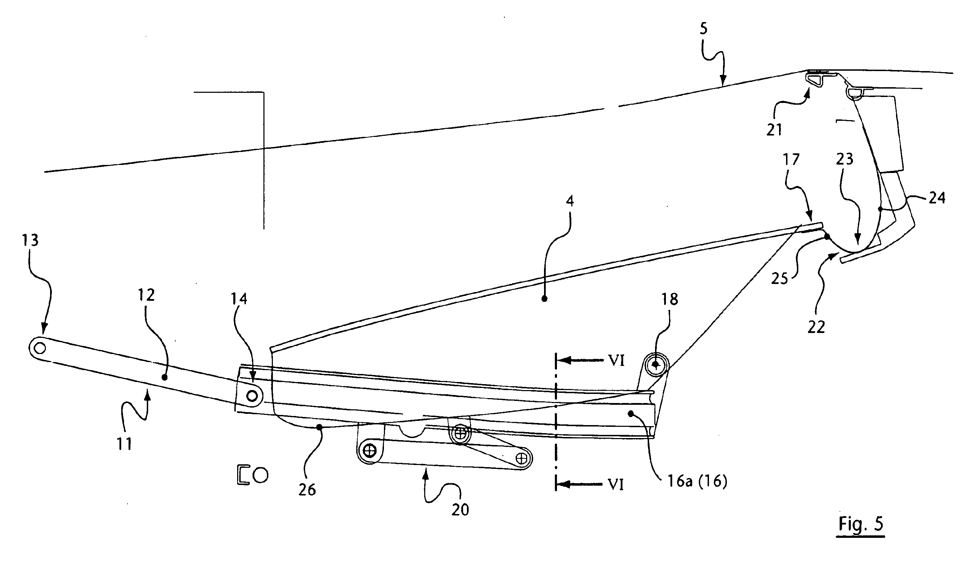

In seinem unteren Bereich ist der hintere Dachteil 3 zumindest über seitliche Anlenkungen 11 an der Karosserie 6 zwischen einer Schließstellung (Fig. 1 - Fig. 3) und einer Offenstellung (Fig. 5) beweglich gehalten. Die Anlenkungen 11 umfassen dabei in Fahrzeuglängsrichtung verlaufende Lenker 12, die einenends 13 karosseriefest angelenkt und anderenends 14 um eine bewegliche horizontale Achse 15 schwenkbeweglich an einem hinteren Spannbügel 16 angreifen, der dem hinteren Dachteil 3 zugeordnet ist und bei geschlossenem Dach 2 die Spannung im rückwärtigen Bereich des textilen Bezugs 2a bewirkt.

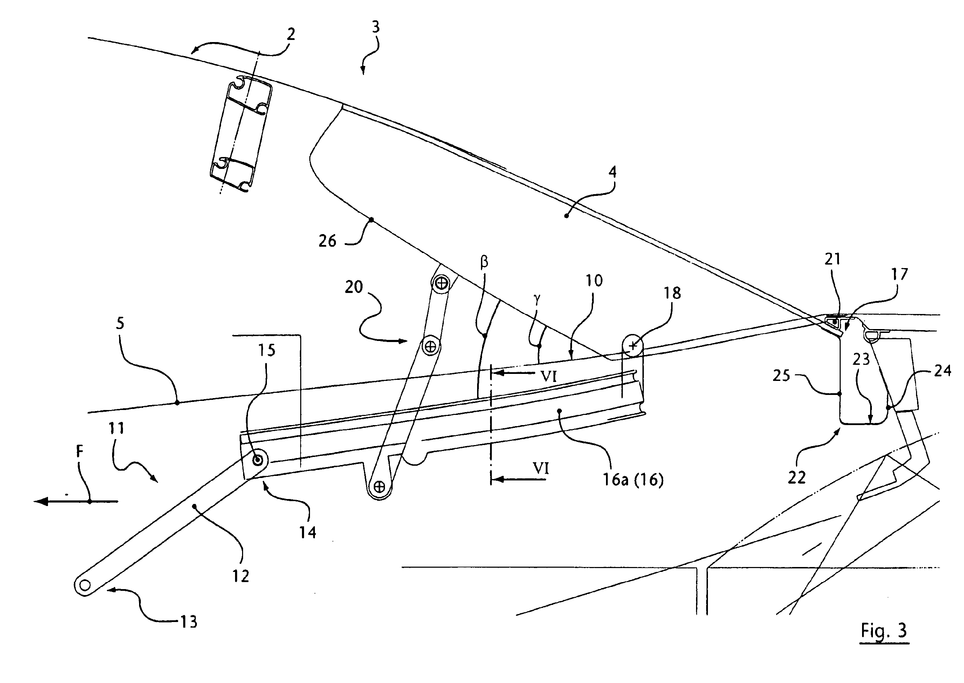

Der Spannbügel 16 des Daches 2 liegt insgesamt bei geschlossenem Dach 2 im wesentlichen horizontal im unteren Bereich des hinteren Dachteils 3. Dabei ist der Spannbügel 16 in zwei seitliche Teilabschnitte 16a aufgespalten. Der Bereich an der Unterkante 17 der Heckscheibe 4 ist hingegen ausgenommen. In diesem bezüglich einer vertikalen Fahrzeuglängsmittelebene mittleren Bereich bildet daher die Unterkante 17 den am weitesten nach unten ragenden Teil des Daches 2 aus. Die Heckscheibe 4 ist somit weder von textilem Verdeckbezug noch von irgendwelchen Rahmen- oder Profilteilen untergriffen. Die Durchsicht ist in ihrem unteren Bereich somit bis zur Fensterbrüstungslinie 5 der Karosserie 6 ungestört möglich. Wie in Fig. 3 sichtbar ist, erstreckt sich die Unterkante 17 der Heckscheibe 4 im geschlossenen Zustand des Daches 2 bis unterhalb einer Dichtung 21 der Brüstungslinie 5.

Die Heckscheibe 4 ist an den seitlichen Abschnitten 16a des Spannbügels 16 über Schwenkscharniere 18 gehalten. Hierüber ist die Scheibe 4 um horizontale Achsen 19 gegenüber dem Spannbügel 16 einschwenkbar.

In geschlossener Dachstellung ergibt sich ein maximaler Öffnungswinkel β der Heckscheibe 4 gegenüber den seitlichen Abschnitten 16a des Spannbügels 16 (Fig. 3). Dieser Winkel verkleinert sich bei der Dachöffnung kontinuierlich.

Die Achse 19 der Scharniere 18 liegt etwa auf einer Höhe mit der Unterkante 17 der Heckscheibe 4. Damit ist erreicht, daß beim Einschwenken der Heckscheibe 4 gegenüber dem Spannbügel 16, somit Verkleinern des Winkels β, das in diesem Winkel befindliche Stoffdreieck des textilen Bezugs 2a des Daches 2 lediglich eingefaltet wird und sich keine Zugspannung darauf ergibt. Eine solche Zugspannung würde zu einem Reißen des Verdeckbezugs an dieser Stelle führen, oder es müßte eine zusätzliche Toleranz, etwa als Tasche eingearbeitet werden, was optisch unvorteilhaft und mit erheblichem Zusatzaufwand verbunden wäre.

Um im geschlossenen Zustand des Daches 2 eine Spannung dieses Stoffdreiecks und eine maximal aufgerichtete Lage der Heckscheibe 4 zu gewährleisten, ist jeder Fahrzeugseite ein zusätzliches Kniehebelgestänge 20 zugeordnet. Durch dieses und die Spannung im Textilbezug 2a wird im geschlossenen Zustand die Heckscheibe 4 in die gewünschte Form gestellt. Durch die Anlenkungen 11 wird die Heckscheibe 4 auch mit ihrem unteren Rand 17 von unten gegen die oben angesprochene karosseriefeste Dichtungslinie 21 gedrückt. Statt des Gestänges 20 wäre auch beispielsweise eine Schraubenfeder im Scharnier 18 möglich, die ein aufrichtendes Drehmoment auf die Scheibe 4 ausübt.

Die Heckscheibe 4 ist in ihrem unteren Kantenbereich 17 weiterhin mit einem flexiblen Wasserkanal 22 verbunden, beispielsweise verklebt, verschweißt oder reaktiv verklebt. Dieser Wasserkanal erstreckt sich im Ausführungsbeispiel, was nicht zwingend ist, U-förmig unterhalb des hinteren Dachteils 3. Er untergreift dann sowohl die Heckscheibe 4 als auch jeweils seitlich hiervon die Abschnitte 16a des Spannbügels 16 und überdeckt jeweils den Zwischenraum zwischen diesen und der Fahrzeugkarosserie 6, an die er direkt angebunden ist. Durch die Flexibilität des Wasserkanals 22 ist somit auch der Übergang zwischen der Heckscheibe 4 und dem Spannbügel 16 einfach zu überbrücken. Es ist daher für die Gestaltung des Wasserkanals 22 auch unerheblich, welche Breite von der Heckscheibe 4 und welche von den Abschnitten 16a des Spannbügels 16 eingenommen wird. Insbesondere ist es daher möglich, die Heckscheibe 4 weit in den Fahrzeugaußenbereich zu ziehen, so daß sie nicht nur quer zur Fahrzeuglängserstreckung liegt, sondern auch in Fahrzeuglängsrichtung weisende Komponenten umfaßt. Damit kann eine Panoramascheibe eingesetzt werden, die nicht nur nach unten, sondern auch zu den Fahrzeugseiten eine erheblich über dem Üblichen liegende Durchsicht ermöglicht. Auch können in Seitenansicht die seitlichen Kanten 26 der Heckscheibe 4 sowohl, wie hier gezeigt, einen spitzen Winkel y gegenüber der Fensterbrüstungslinie 5 als auch einen stumpfen Winkel ausbilden.

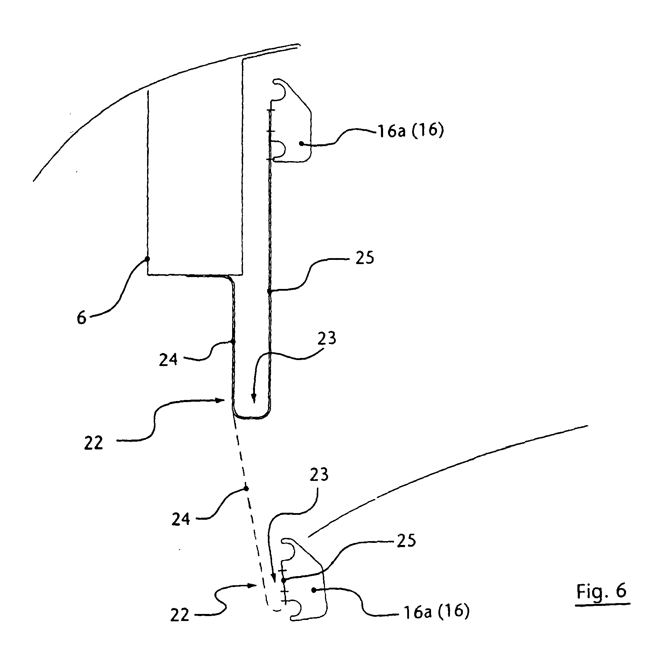

Der hier einstückige Wasserkanal 22 ist als flexibles Kunststoffbauteil ausgebildet, hier aus PVC. Er bildet jeweils im Querschnitt (Fig. 6) eine Mulde 23 aus, die zur Karosserie 6 von einer ersten Wandung 24 und zum Spannbügel 16 bzw. zur Scheibe 4 von einer zweiten Wandung 25 begrenzt wird.

Im geschlossenen Zustand des Daches 2, wenn der Spannbügel 16 und die Heckscheibe 4 in ihrer maximal aufwärts verlagerten Stellung gehalten sind (in Fig. 6 durchgezeichnet) beträgt das Höhenverhältnis der Wandung 24 zur Wandung 25 etwa 1:3. Im geöffneten zustand des Daches 2, wenn Spannbügel 16 und Heckscheibe 4 maximal abgesenkt sind (in Fig. 6 gestrichelt) beträgt das Verhältnis etwa 5:1. Dies zeigt die hohe Flexibilität im für den Wasserkanal 22 eingesetzten Material. Auch noch größere Längenänderungen in der Wanderstrekkung 24, 25 sind möglich, so daß der Hubweg des Spannbügels 16 und der Heckscheibe 4 zu ihrer Ablage in die Karosserie 6 erheblich sein kann. Dies ist insbesondere dann bedeutsam. wenn ein großer Innenraum überspannt werden soll und das Dach 2 sich etwa in Z-Faltung ablegt, wobei die Heckscheibe 4 die am weitesten unten in der Karosserie liegende Lage bildet und zwei weitere Dachteile darüber, jedoch immer noch unterhalb der Fensterbrüstungslinie 5 liegen. Auch für diesen Fall kann erfindungsgemäß die Abdichtung des Daches 2 zur Karosserie 6 zuverlässig, mit minimalem Gewicht und mechanischem Aufwand bewirkt werden. Die Abdichtung ist dabei gegen Eindringen von Wasser und Schmutz wirksam und bildet zudem einen Eingriffsschutz in einen an den Dachaufnahmeraum in der Karosserie 6 anschließenden Gepäckraum aus. An den freien Enden des U-förmigen Wasserkanals 22 kann dieser in Ablaufschläuche, Vertikalkanäle oder dergleichen einmünden.

Es versteht sich, daß die Erfindung nicht auf ein Cabriolet-Fahrzeug mit der hier gezeigten Ablagekinematik beschränkt ist.

## Patentansprüche

1. Cabriolet-Fahrzeug (1) mit einem rückwärtigen, eine Heckscheibe (4) umfassenden Dachteil (3), der zumindest einen unteren, zur Dachöffnung absenkbaren Spannbügel (16) umfaßt,
**dadurch gekennzeichnet,**
**daß** der Spannbügel (16) über einen flexiblen Wasserkanal (22) an die Karosserie (6) angebunden ist.

2. Cabriolet-Fahrzeug (1) nach Anspruch 1,
**dadurch gekennzeichnet,**
**daß** der Spannbügel (16) seitlich der Heckscheibe (4) erstreckte Bügelteile (16a) ausbildet und der Bereich unterhalb der Heckscheibe (4) frei belassen ist.

3. Cabriolet-Fahrzeug (1) nach einem der Ansprüche 1 oder 2,
**dadurch gekennzeichnet,**
**daß** ein im geschlossenen Zustand unterer Randbereich (7) des rückwärtigen Dachteils (3) zumindest in dem in Fahrzeugquerrichtung mittleren Bereich von einem Kantenbereich (17) der Heckscheibe (4) gebildet ist und an diese der flexible Wasserkanal (22) angebunden ist, der sowohl im geöffneten als auch im geschlossenen Zustand des Daches (2) die Heckscheibe (4) gegenüber der Karosserie (6) abdichtet.

4. Cabriolet-Fahrzeug nach einem der Ansprüche 1 bis 3,
**dadurch gekennzeichnet,**
**daß** der Wasserkanal (22) den rückwärtigen Dachabschluß horizontal U-förmig umläuft und in seitlichen Bereichen mit Abschnitten (16a) des Spannbügels (16) und im mittleren Bereich mit der Heckscheibe (4) verbunden ist.

5. Cabriolet-Fahrzeug nach Anspruch 4,
**dadurch gekennzeichnet,**
**daß** der Wasserkanal (22) als durchgehendes Bauteil ausgebildet ist.

6. Cabriolet-Fahrzeug nach einem der Ansprüche 2 bis 5,
**dadurch gekennzeichnet,**
**daß** der Wasserkanal (22) aus einem flexiblen Kunststoffmaterial gebildet ist.

7. Cabriolet-Fahrzeug nach Anspruch 6,
**dadurch gekennzeichnet,**
**daß** der Wasserkanal (22) aus PVC gebildet ist.

8. Cabriolet-Fahrzeug nach einem der Ansprüche 2 bis 7,
**dadurch gekennzeichnet,**
**daß** Wasserkanal (22) im Querschnitt eine Mulde (23) mit zwei seitlich hiervon aufragenden Wandungen (24;25) ausbildet, wobei die Lage der Mulde (23) und das Höhenverhältnis der Wandungen (24;25) zueinander in Abhängigkeit vom Öffnungszustand des Daches (2) variieren und wobei eine Wandung (25) dem Dach (2) und eine (24) der Karosserie (6) zugeordnet ist.

9. Cabriolet-Fahrzeug nach Anspruch 8,
**dadurch gekennzeichnet,**
**daß** das Höhenverhältnis zwischen der der Karosserie (6) zugeordneten (24) und der dem Dach (2) zugeordneten Wandung (25) zwischen 5:1 und 1:5 variiert.

10. Cabriolet-Fahrzeug nach einem der Ansprüche 1 bis 9,
**dadurch gekennzeichnet,**
**daß** die Heckscheibe (4) in ihren seitlichen Bereichen gewölbt ist und eine Erstreckungskomponente in Fahrzeuglängsrichtung aufweist.

## Claims

1. A convertible vehicle (1) with a rear roof part (3) that comprises a rear window (4) and at least a lower tensioning bow (16) which can be lowered to open the roof,
**characterised in that**
the tensioning bow (16) is linked to the vehicle body (6) via a flexible water channel (22).

2. The convertible vehicle (1) according to claim 1, **characterised in that** the tensioning bow (16) forms bow members (16a) which extend laterally of the rear window (4) and that the area underneath the rear window (4) is left free.

3. The convertible vehicle (1) according to any one of claims 1 or 2, **characterised in that** a peripheral region (7), which forms a lower end of the rear roof part (3) when the roof is closed, is formed by an edge region (17) of the rear window (4) at least in the central region in the transverse direction of the vehicle, and the flexible water channel (22) is linked to said rear window (4), said water channel (22) sealing the rear window (4) with respect to the vehicle body (6) both in the opened and in the closed state of the roof (2).

4. The convertible vehicle according to any one of claims 1 to 3, **characterised in that** the water channel (22) extends in a horizontal U-shape around the rear roof end, with the lateral areas of the water channel (22) being connected to portions (16a) of the tensioning bow (16) and its central area being connected to the rear window (4).

5. The convertible vehicle according to claim 4, **characterised in that** the water channel (22) is provided as a continuous component.

6. The convertible vehicle according to any one of claims 2 to 5, **characterised in that** the water channel (22) is formed of a flexible plastic material.

7. The convertible vehicle according to claim 6, **characterised in that** the water channel (22) is formed of PVC.

8. The convertible vehicle according to any one of claims 2 to 7, **characterised in that** the water channel (22) has a cross-section in the form of a recess (23) from which two walls (24; 25) rise up laterally, with the position of the recess (23) and the height ratio of the walls (24; 25) relative to each other varying according to the opening condition of the roof (2), and with a wall (25) being assigned to the roof (2) and a wall (24) being assigned to the vehicle body (6).

9. The convertible vehicle according to claim 8, **characterised in that** the height ratio between the wall (24) assigned to the vehicle body (6) and the wall (25) assigned to the roof (2) varies between 5:1 and 1:5.

10. The convertible vehicle according to any one of claims 1 to 9, **characterised in that** the rear window (4) is arched in its lateral regions and comprises a extension component in the longitudinal direction of the vehicle.

## Revendications

1. Véhicule cabriolet (1) avec une partie de toit arrière (3) comprenant une lunette arrière (4) et au moins un arceau inférieur (16) que l'on peut abaisser pour ouvrir le toit,
**caractérisé en ce que**
ledit arceau (16) est relié à la carrosserie (6) par le biais d'un canal d'eau (22) flexible.

2. Véhicule cabriolet (1) selon la revendication 1, **caractérisé en ce que** l'arceau (16) constitue des éléments d'arceau (16a) qui s'étendent latéralement par rapport à la lunette arrière (4) et **en ce que** la région au-dessous de la lunette arrière (4) reste libre.

3. Véhicule cabriolet (1) selon l'une quelconque des revendications 1 ou 2, **caractérisé en ce qu'**une région périphérique (7), disposée en bas lorsque le toit est fermé, de la partie de toit arrière (3) est constituée par une région de bord (17) de la lunette arrière (4), au moins dans la région centrale en direction transversale du véhicule, et le canal d'eau (22) flexible est relié à la lunette arrière (4), étanchéifiant la lunette arrière (4) par rapport à la carrosserie (6) n'importe si le toit (2) est ouvert ou fermé.

4. Véhicule cabriolet selon l'une quelconque des revendications 1 à 3, **caractérisé en ce que** le canal d'eau (22) s'étend en forme de U horizontal autour de l'extrémité arrière du toit, des régions latérales du canal d'eau (22) étant reliées à des parties (16a) de l'arceau (16) et la région centrale dudit canal d'eau (22) étant reliée à la lunette arrière (4).

5. Véhicule cabriolet selon la revendication 4, **caractérisé en ce que** le canal d'eau (22) se présente sous la forme d'un élément continu.

6. Véhicule cabriolet selon l'une quelconque des revendications 2 à 5, **caractérisé en ce que** le canal d'eau (22) est réalisé en matériau plastique flexible.

7. Véhicule cabriolet selon la revendication 6, **caractérisé en ce que** le canal d'eau (22) est réalisé en CVP.

8. Véhicule cabriolet selon l'une quelconque des revendications 2 à 7, **caractérisé en ce que** le canal d'eau (22) constitue en section transversale une auge (23) avec deux parois (24; 25) s'élevant latéralement de celle-ci, la position de l'auge (23) et le rapport des hauteurs des parois (24; 25) changeant selon l'état d'ouverture du toit (2), une paroi (25) étant associée au toit (2) et une paroi (24) étant associée à la carrosserie (6).

9. Véhicule cabriolet selon la revendication 8, **caractérisé en ce que** le rapport entre l'hauteur de la paroi (24) associée à la carrosserie (6) et l'hauteur de la paroi (25) associée au toit (2) est variable entre 5:1 et 1:5.

10. Véhicule cabriolet selon l'une quelconque des revendications 1 à 9, **caractérisé en ce que** la lunette arrière (4) est arquée dans ses régions latérales et présente une composante d'extension en direction longitudinale du véhicule.
